# EUROPÄISCHE PATENTSCHRIFT

(11) **EP 3 318 926 B1**
(45) Veröffentlichungstag und Bekanntmachung des Hinweises auf die Patenterteilung: **17.08.2022**
(21) Anmeldenummer: 17200247.9
(22) Anmeldetag: 07.11.2017
(51) Int. Cl.: G03B 37/00, G01B 11/27

(54) **VERFAHREN ZUM AUSRICHTEN EINER KAMERA IN EINEM EINE ROHRLEITUNG AUFWEISENDEN LEITUNGSNETZ**
METHOD FOR ALIGNING A CAMERA IN A NETWORK OF PIPES COMPRISING A PIPELINE
PROCÉDÉ D'ALIGNEMENT D'UNE CAMÉRA DANS UN RÉSEAU DE CONDUITES COMPORTANT UNE CONDUITE

(30) Priorität: 08.11.2016 DE 102016121286
(43) Veröffentlichungstag der Anmeldung: 09.05.2018
(73) Patentinhaber: IBAK Helmut Hunger GmbH & Co. KG, 24148 Kiel (DE)
(72) Erfinder: Ermoneit, Klaus, 24248 Mönkeberg (DE); Richter, Andreas, 24256 Fargau-Pratjau (DE)
(74) Vertreter: Lobemeier, Martin Landolf

(56) Entgegenhaltungen:
- JP-A- H0 755 426
- US-A1- 2006 164 512
- US-A1- 2008 021 662

## Beschreibung

Die Erfindung betrifft ein Verfahren zum Ausrichten einer Kamera in einem eine Rohrleitung aufweisenden Leitungsnetz. Darüber hinaus betrifft die Erfindung eine mit einer Kamera ausgestatteten Vorrichtung zur Kanalrohrinspektion- und/oder -sanierung, die zur Ausführung des Verfahrens eingerichtet ist.

Im Rahmen der Zustandskontrolle und Wartung von Leitungsnetzen werden zur Inspektion und Sanierung der Rohrleitungen regelmäßig mit einer Kamera ausgestattete Inspektions- bzw. Sanierungseinheiten verwendet, ohne dass ein Einstieg in das Kanalrohr nötig wäre. Hierbei wird eine Vorrichtung zur Kanalrohrinspektion- und/oder -sanierung in einen Schacht, von dem eine Rohrleitung abzweigt, oder durch einen Schacht in eine Rohrleitung selbst eingebracht.

Die Kontrolle einer Rohrleitung von einem Schacht aus wird üblicherweise mittels eines Kanalspiegels erledigt, wobei moderne Kanalspiegel anstelle eines Spiegels aus Glas oder Edelstahl eine hochauflösende Kamera mit optischem und/oder digitalem Zoom aufweisen. Mit zunehmender Auflösung und zunehmender Lichtempfindlichkeit der bei elektronischen Kanalspiegeln verwendeten Digitalkameras ist die Begutachtung vom Schacht weit entfernter Rohrleitungsabschnitte grundsätzlich möglich, sodass ein Kanalspiegel ein einfach handzuhabendes, robustes System darstellt, das eine schnelle und damit kostengünstige Arbeitsweise zulässt.

Allerdings hat die praktische Anwendung von Kanalspiegeln ergeben, dass die Kamera des Kanalspiegels regelmäßig unzureichend justiert ist, um auch die vom Schacht weit entfernten Rohrabschnitte tatsächlich zu erfassen:
Vor dem Einbringen des Kanalspiegels in einen Schacht wird die Kamera in Abhängigkeit vom Ort der Abzweigung und vom Durchmesser des zu inspizierenden Kanalrohrs an einer vorgegebenen Position des auf dem Grund des Schachts, von dem das Kanalrohr abgeht, bzw. auf dem Grund des Kanalrohrs selbst abzusetzenden Stabs des Kanalspiegels derart fixiert, dass die Kamera das Rohr abbilden und in das Rohr hinein zoomen kann. Die hierfür notwendigen Parameter müssen entweder aus bereits vorhandenem Kartenmaterial des Leitungsnetzes abgelesen, zuvor ausgemessen oder geschätzt werden. Nahezu unvermeidlich sind dabei Positionierungsfehler der Kamera aufgrund von im Schacht oder im Rohr vorhandenen Verschmutzungen. Des Weiteren tragen auch Positionierungsfehler des Stabs im Verhältnis zum Schacht, z.B. außermittige Anordnung oder Schiefstellung, zu einer ungenauen Positionierung der Kamera des Kanalspiegels in Bezug auf das zu inspizierende Rohr bei.

Ist die Kamera aber im Verhältnis zu der zu inspizierenden Rohrleitung schief ausgerichtet, wird ein Zoomen zur Abbildung nah gelegener Wandbereiche der Rohrleitung, nicht aber zur Abbildung weit entfernter Bereiche führen.

Ein ähnliches Problem besteht bei Kameras, die an einem Schiebestab oder auf Fahrwagen angeordnet sind. Eine außermittige Anordnung einer solchen Kamera führt zu perspektivischen Verzerrungen bei der Aufnahme der das Kanalrohr abbildenden Bilder und erschwert damit eine Begutachtung unterschiedlicher Abschnitte der Rohrleitung unter identischen Bedingungen.

Zwar sind Einrichtungen bekannt, die die optische Achse von Schiebekameras oder von Kameras auf Fahrwagen in der Mitte des Rohrs positionieren sollen. Diese basieren allerdings allein auf dem Nenndurchmesser des zu inspizierenden Kanalrohrs, das jedoch aufgrund von Verschmutzungen und Ablagerungen andere geometrische Parameter als die theoretisch angenommen Werte aufweisen kann. Außerdem bleibt bei der Positionierung dieser Kameras auch der Verschleiß der verwendeten Komponenten unberücksichtigt, sodass beispielsweise der Abrieb der Räder eines Fahrwagens zu einer niedrigeren Positionierung der Kamera führen kann, als beabsichtigt. JPH0755426 und US 2008/021662 offenbaren Verfahren zum Ausrichten einer Kamera in einem eine Rohrleitung aufweisenden Leitungsnetz.

Aufgabe der Erfindung ist es daher, ein Verfahren für die exakte Positionierung einer Kamera in einem Leitungsnetz, also in einem Kanalschacht und/oder in einer Rohrleitung in Bezug auf das zu inspizierende Kanalrohr, zu schaffen. Das Verfahren soll möglichst robust und automatisiert erfolgen. Insbesondere sollen Anwendungsfehler vermieden und möglichst kompensiert werden.

Diese Aufgabe wird erfindungsgemäß durch das Verfahren mit den Merkmalen von Anspruch 1 und die Vorrichtung mit den Merkmalen von Anspruch 8 gelöst. Die jeweils von den nebengeordneten Ansprüchen abhängigen Unteransprüche geben vorteilhafte Ausgestaltungen der Erfindung wieder.

Grundgedanke der Erfindung ist es, die Geometrie einer zu inspizierenden Rohrleitung aus einem Bild einer in eine Leitungsnetz eingebrachten Kamera, das eine Ansicht der Rohrleitung wiedergibt, zu bestimmen und die Kamera aufgrund der bestimmten Rohrgeometrie so in Bezug auf die Rohrleitung auszurichten, dass die optische Achse der Kamera in der Achse der Rohrleitung liegt. Aus der perspektivischen Verzerrung des abgebildeten Rohres bzw. Rohrabschnitts kann bei Kenntnis der optischen Parameter der Kamera also die Geometrie des Rohres wie auch die relative Lage der Kamera zum Rohr ermittelt und die Kamera so ausgerichtet werden, dass die optische Achse der Kamera in der Achse der Rohrleitung liegt. Die Ausrichtung der optischen Achse der Kamera in der Achse der Rohrleitung ermöglicht dabei ein exaktes Zoomen in die Rohrleitung hinein, sodass auch von der Kamera entfernte Rohrleitungsabschnitte ungehindert und unter gleichbleibenden Bedingungen eingesehen werden können.

Die zu inspizierende Rohrleitung kann jegliche Art von Rohrleitung sein. Die zu inspizierende Rohrleitung ist regelmäßig kreisrund ausgestaltet, kann aber auch einen anderen Querschnitt aufweisen, ohne dass das Verfahren nach der Erfindung hierdurch nicht anwendbar wäre.

Das Bestimmen der Geometrie der Rohrleitung schließt insbesondere das Bestimmen der Achse der Rohrleitung und der räumlichen Beziehung der Rohrleitungsgeometrie zur Kamera ein.

Die Geometrie der Rohrleitung wird durch ein bildverarbeitendes Verfahren bestimmt. Hierfür wird in dem von der Kamera aufgenommenen Bild wenigstens eine geometrische Struktur der Rohrleitung identifiziert und hinsichtlich der Rohrgeometrie ausgewertet. Bei den geometrischen Strukturen kann es sich beispielsweise um ein Verbindungselement zwischen Abschnitten der Rohrleitung, z.B. einen Rohrflansch, einen Rohrstutzen oder eine Rohrmuffe, oder der (innenliegende) nicht ausgeleuchtete Bereich der Rohrleitung, der der Kamera gegenüberliegt, handeln.

Zum Bestimmen der Geometrie der Rohrleitung können auch mehrere die Geometrie der Rohrleitung definierende geometrische Strukturen verwendet werden, aus denen gemeinsam die Geometrie der Rohrleitung bestimmt wird. Hierzu kann beispielsweise eine erste geometrische Struktur der Rohrleitung, z. B. eine Muffe, und zusätzlich eine zweite geometrische Struktur, z.B. eine weitere Muffe oder bevorzugt der (innenliegende) nicht ausgeleuchtete Bereich der Rohrleitung, der der Kamera gegenüberliegt, verwendet werden. Der nicht ausgeleuchtete Bereich einer Rohrleitung erscheint bei Ausrichtung der optischen Achse der Kamera in der Achse der Rohrleitung bei runden Rohren als kreisrunder dunkler Bereich, dessen Mittelpunkt in der Rohrleitungsachse liegt. Abweichungen von diesem Muster ermöglichen eine besonders einfache Bestimmung des Achsverlaufs der Rohrleitung. Dabei versteht es sich, dass die Gesamtheit der Rohrleitung nicht zwingend in gestreckter Konformation vorliegen muss, sondern auch Bogenstücke aufweisen kann, die einer Inspektion durch Zoomen nicht zugänglich sind bzw. bei Verwendung eines Fahrwagens erst durchfahren werden müssen. Insofern bezieht sich das Bestimmen der Geometrie der Rohrleitung immer nur auf einen bestimmten Abschnitt der Rohrleitung, der dem gesamten im erfassten Bild dargestellten Abschnitt oder nur einem Teilbereich davon entsprechen kann. Insbesondere handelt es sich bei der Bestimmung der Achse der Rohrleitung um einen über den Verlauf der Rohrleitung bestimmten mittleren Achsverlauf.

Erfindungsgemäß ist also ein Verfahren zum Ausrichten einer Kamera in einem eine Rohrleitung aufweisenden Leitungsnetz vorgesehen, das die folgenden Schritte aufweist:
a. Einbringen der Kamera in ein eine Rohrleitung aufweisendes Leitungsnetz,
b. Aufnehmen wenigstens eines eine Ansicht der Rohrleitung wiedergebenden Bilds,
c. Bestimmen der Geometrie der Rohrleitung anhand des wenigstens einen Bilds, und
d. Ausrichten der Kamera aufgrund der anhand des wenigstens einen Bilds bestimmten Geometrie der Rohrleitung mittels wenigstens eines Aktors derart, dass die optische Achse der Kamera in der Achse der Rohrleitung liegt.

Das Ausrichten der Kamera erfolgt speziell durch Verschieben der Kamera entlang wenigstens einer Achse und/oder Drehen der Kamera um wenigstens eine Achse.

Statt die Geometrie der Rohrleitung aus nur einem einzigen Bild zu bestimmen, kann Schritt b. das Aufnehmen von wenigstens zwei unterschiedliche Ansichten der Rohrleitung wiedergebenden Bildern und Schritt c. das Bestimmen der Geometrie der Rohrleitung anhand der wenigstens zwei Bilder umfassen.

Die unterschiedlichen Ansichten der Rohrleitung werden bevorzugt durch Nicken und/oder Gieren der Kamera zwischen dem Aufnehmen der wenigstens zwei unterschiedlichen Ansichten der Rohrleitung angefertigt, sodass die Geometrie der Rohrleitung aus zwei unterschiedliche Ansichten derselben Rohrleitung wiedergebenden Bildern bestimmt wird.

Zusätzlich oder alternativ können die unterschiedlichen Ansichten auch durch Verschieben der Kamera entlang deren optischen Achse zwischen dem Aufnehmen der wenigstens zwei unterschiedlichen Ansichten der Rohrleitung angefertigt werden. Diese Vorgehensweise ist insbesondere für die Verwendung von einer auf einem Fahrwagen angeordneten Kamera geeignet.

Das Verfahren beinhaltet bevorzugt das Einbringen der Kamera in einen Kanalschacht und Aufnehmen eines Bilds, das eine vom Kanalschacht abzweigende Rohrleitung wiedergibt. Alternativ wird die Kamera direkt in eine Rohrleitung eingebracht und die Aufnahme des eine Ansicht der Rohrleitung wiedergebenden Bilds in der Rohrleitung selbst angefertigt.

Erfindungsgemäß ist schließlich auch eine Vorrichtung zur Kanalrohrinspektion- und/oder - sanierung vorgesehen, die eine Kamera, Mittel zur Bestimmung der Geometrie einer Rohrleitung anhand wenigstens eines von der Kamera aufgenommenen, eine Ansicht einer Rohrleitung wiedergebenden Bilds, und Mittel zur Ausrichtung der Kamera derart, dass die optische Achse der Kamera in der Achse der Rohrleitung liegt, aufweist.

Die Vorrichtung ist so eingerichtet, dass mit dieser das zuvor beschriebene Verfahren ausgeführt werden kann.

Die Vorrichtung ist bevorzugt ein Kanalspiegel oder ein mit einer Kamera ausgestatteter Fahrwagen.

Die Kamera weist bevorzugt sechs Freiheitsgrade auf, kann also entlang drei voneinander unabhängiger Achsen translatiert und um diese Achsen auch rotiert werden. Für die Translation und/oder Rotation der Kamera sind Motoren vorgesehen, die besonders bevorzugt als Elektromotoren ausgebildet sind.

Das Ermitteln der Rohrleitungsachse erfolgt dabei bevorzugt softwarebasiert aufgrund der im aufgenommenen Bild erfassten Geometrien und/oder Helligkeitsverteilung, wobei die ermittelte Rohrleitungsachse besonders bevorzugt im aufgenommenen Bild dargestellt wird und dem Benutzer so eine Hilfe zur Ausrichtung der Kamera bieten kann.

Zur Durchführung des Verfahrens mittels eines Kanalspiegels ist bevorzugt wenigstens ein Aktor zum Drehen der Kamera um die Längsachse des Stabs und/oder Schwenken der Kamera quer zur Längsachse des Stabs und/oder Verschieben der Kamera entlang der Längsachse des Stabs vorgesehen. Durch diese Ausgestaltung muss der Kanalspiegel zur Justierung der Kamera nicht aus dem Rohr entnommen werden, sondern vielmehr kann die Justierung bei im Schacht bzw. Rohr angeordneter Kamera vorgenommen werden, die Fernbedienbarkeit des Aktors vorausgesetzt. Sind besonders bevorzugt mehrere Aktoren vorgesehen, so sind diese zur Ausübung von Bewegungen der Kamera entlang oder um die drei Raumachsen eingerichtet.

Besonders bevorzugt ist das Verfahren ausgestaltet, wenn eine die Achse des Kanalrohrs aus dem von der Kamera aufgenommenen Bild ermittelnde Auswerteeinheit und einer mit der Auswerteeinheit und mit dem wenigstens einen Aktor auf den Aktor wirkende Steuereinheit vorgesehen ist.

Bei dieser besonders bevorzugten Ausgestaltung kann das Verfahren vollautomatisiert erfolgen, ohne dass der Benutzer sich um die Ausrichtung der Kamera überhaupt Gedanken machen oder Einstellungen vornehmen muss.

Bevorzugt ist der Stab als Teleskopstab ausgebildet, wobei die Kamera am Stab besonders bevorzugt derart angeordnet ist, dass eine Längenänderung des Stabs zu einer

Positionsänderung der Kamera im zu untersuchenden Rohr führt. Der längenveränderbare Abschnitt des Stabs befindet sich bei dieser besonders bevorzugten Ausgestaltung also an dem dem Benutzer gegenüberliegenden Ende des Stabs.

Bei einer Anwendung des Verfahrens bei einer auf einem Fahrwagen angeordneten Kamera sind ebenfalls Aktoren vorzusehen, die die Kamera entlang einer Achse verschieben und/oder um eine Achse drehen.

## Patentansprüche

1. Verfahren zum Ausrichten einer Kamera in einem eine Rohrleitung aufweisenden Leitungsnetz,
**gekennzeichnet durch** die Schritte:
a. Einbringen der Kamera in ein eine Rohrleitung aufweisendes Leitungsnetz,
b. Aufnehmen wenigstens eines eine Ansicht der Rohrleitung wiedergebenden Bilds,
c. Bestimmen der Geometrie der Rohrleitung anhand des wenigstens einen Bilds, und
d. Ausrichten der Kamera aufgrund der anhand des wenigstens einen Bilds bestimmten Geometrie der Rohrleitung mittels wenigstens eines Aktors derart, dass die optische Achse der Kamera in der Achse der Rohrleitung liegt.

2. Verfahren nach Anspruch 1, **dadurch gekennzeichnet, dass** das Ausrichten der Kamera durch Verschieben der Kamera entlang einer Achse und/oder Drehen der Kamera um eine Achse erfolgt.

3. Verfahren nach einem der vorhergehenden Ansprüche, **dadurch gekennzeichnet, dass** Schritt b. das Aufnehmen von wenigstens zwei unterschiedliche Ansichten der Rohrleitung wiedergebenden Bildern und Schritt c. das Bestimmen der Geometrie der Rohrleitung anhand der wenigstens zwei Bilder aufweist.

4. Verfahren nach Anspruch 3, **gekennzeichnet durch** Nicken und/oder Gieren der Kamera zwischen dem Aufnehmen der wenigstens zwei unterschiedlichen Ansichten der Rohrleitung.

5. Verfahren nach einem der Ansprüche 3 und 4, **gekennzeichnet durch** Verschieben der Kamera entlang deren optischen Achse zwischen dem Aufnehmen der wenigstens zwei unterschiedlichen Ansichten der Rohrleitung.

6. Verfahren nach einem der vorhergehenden Ansprüche, **gekennzeichnet durch** Einbringen der Kamera in einen Kanalschacht und Aufnehmen eines Bilds, das eine vom Kanalschacht abzweigende Rohrleitung wiedergibt.

7. Verfahren nach einem der vorhergehenden Ansprüche, **gekennzeichnet durch** Einbringen der Kamera in eine Rohrleitung.

8. Vorrichtung zur Kanalrohrinspektion- und/oder -sanierung mit
- einer Kamera,
- Mitteln zur Bestimmung der Geometrie einer Rohrleitung anhand wenigstens eines von der Kamera aufgenommenen, eine Ansicht einer Rohrleitung wiedergebenden Bilds, und
- Mitteln zur Ausrichtung der Kamera aufgrund der anhand des wenigstens einen Bilds bestimmten Geometrie der Rohrleitung mittels wenigstens eines Aktors derart, dass die optische Achse der Kamera in der Achse der Rohrleitung liegt.

9. Vorrichtung nach Anspruch 8, **dadurch gekennzeichnet, dass** die Vorrichtung ein Kanalspiegel ist.

10. Vorrichtung nach Anspruch 8, **dadurch gekennzeichnet, dass** die Kamera auf einem Fahrwagen angeordnet ist.

## Claims

1. Method for aligning a camera in a network of pipes comprising a pipeline, **characterized by** the steps of:
a. introducing the camera into a network of pipes comprising a pipeline,
b. recording at least one image representing a view of the pipeline,
c. determining the geometry of the pipeline using the at least one image, and
d. on the basis of the geometry of the pipeline, determined using the at least one image, aligning the camera by means of at least one actuator in such a way that the optical axis of the camera lies on the axis of the pipeline.

2. Method according to Claim 1, **characterized in that** the alignment of the camera takes place by displacing the camera along an axis and/or by rotating the camera about an axis.

3. Method according to one of the preceding claims, **characterized in that** step b. comprises the recording of at least two images representing different views of the pipeline, and step c. comprises the determination of the geometry of the pipeline using the at least two images.

4. Method according to Claim 3, **characterized by** pitching and/or yawing the camera between the recording of the at least two different views of the pipeline.

5. Method according to one of Claims 3 and 4, **characterized by** displacing the camera along its optical axis between the recording of the at least two different views of the pipeline.

6. Method according to one of the preceding claims, **characterized by** introducing the camera into a sewer shaft, and recording an image which represents a pipeline branching off from the sewer shaft.

7. Method according to any one of the preceding claims, **characterized by** introducing the camera into a pipeline.

8. Device for sewage pipe inspection and/or remediation with
- a camera,
- means for determining the geometry of a pipeline using at least one image recorded by the camera and representing a view of a pipeline, and
- means for aligning the camera on the basis of the geometry of the pipeline, determined using the at least one image, by means of at least one actuator, in such a way that the optical axis of the camera lies on the axis of the pipeline.

9. Device according to Claim 8, **characterized in that** the device is a sewer mirror.

10. Device according to Claim 8, **characterized in that** the camera is arranged on a carriage.

## Revendications

1. Procédé d'alignement d'une caméra dans un réseau de conduites comportant une conduite
**caractérisé par** les étapes :
a. d'introduction de la caméra dans un réseau de conduites comportant une conduite,
b. de prise d'au moins une image reproduisant une vue du tuyau,
c. de détermination de la géométrie du tuyau à l'aide de l'au moins une image, et
d. d'alignement de la caméra, en raison de la géométrie du tuyau déterminée à l'aide de l'au moins une image, au moyen d'au moins un actionneur de telle façon que l'axe optique de la caméra soit situé dans l'axe du de la conduite.

2. Procédé selon la revendication 1, **caractérisé en ce que** l'alignement de la caméra est effectuée par le déplacement de la caméra le long d'un axe et/ou la rotation de la caméra autour d'un axe.

3. Procédé selon l'une quelconque des revendications précédentes, **caractérisé en ce que** l'étape b. comporte la prise d'au moins deux images reproduisant des vues différentes du de la conduite et l'étape c. comporte la détermination de la géométrie du de la conduite à l'aide des au moins deux images.

4. Procédé selon la revendication 3, **caractérisé par** le tangage et/ou le lacet de la caméra entre les prises des au moins deux vues différentes du de la conduite.

5. Procédé selon l'une quelconque des revendications 3 et 4, **caractérisé par** le déplacement de la caméra e long de son axe optique entre les prises des aux moins deux vues différentes de la conduite.

6. Procédé selon l'une quelconque des revendications précédentes, **caractérisé par** l'introduction de la caméra dans un puits de canalisation et la prise d'une image qui reproduit une conduite bifurquant du puits de canalisation.

7. Procédé selon l'une quelconque des revendications précédentes, **caractérisé par** l'introduction de la caméra dans une conduite.

8. Dispositif d'inspection et/ou d'assainissement de canalisation comprenant
- une caméra
- des moyens pour la détermination de la géométrie d'une conduite à l'aide d'au moins une image prise par la caméra et reproduisant une vue d'une conduite, et
- des moyens d'alignement de la caméra, en raison de la géométrie du tuyau déterminée à l'aide de l'au moins une image, au moyen d'au moins un actionneur de telle façon que l'axe optique de la caméra soit situé dans l'axe du tuyau.

9. Dispositif selon la revendication 8, **caractérisé en ce que** le dispositif est un miroir de canalisation.

10. Dispositif selon la revendication 8, **caractérisé en ce que** la caméra est dispose sur un chariot moteur.
